# EUROPEAN PATENT SPECIFICATION

(11) **EP 3 842 658 B1**
(45) Date of publication and mention of the grant of the patent: **17.05.2023**
(21) Application number: 19852244.3
(22) Date of filing: 23.08.2019
(51) Int. Cl.: F16F 1/12, B60G 11/16

(54) **SUSPENSION COIL SPRING DEVICE**
FEDERVORRICHTUNG FÜR AUFHÄNGUNGSFEDER
DISPOSITIF À RESSORT HÉLICOÏDAL DE SUSPENSION

(30) Priority: 24.08.2018 JP 2018157586
(43) Date of publication of application: 30.06.2021
(73) Proprietor: NHK Spring Co., Ltd., Yokohama-shi, Kanagawa 236-0004 (JP)
(72) Inventor: SHIBATA, Yuichi, Yokohama-shi, Kanagawa 236-0004 (JP); SUWA, Taisuke, Yokohama-shi, Kanagawa 236-0004 (JP)
(74) Representative: V.O.
(86) International application number: PCT/JP2019/033037
(87) International publication number: WO 2020/040290

(56) References cited:
- JP-A- H10 114 859
- JP-A- 2015 190 538
- JP-A- 2017 015 249
- JP-B2- 2 929 230
- US-A1- 2014 352 980

## Description

### TECHNICAL FIELD

The present invention relates to a suspension coil spring device that is used in a suspension mechanism of a vehicle such as an automobile.

Priority is claimed on Japanese Patent Application No. 2018-157586, filed August 24, 2018.

### BACKGROUND ART

A suspension coil spring device including a compression coil spring is used in a suspension mechanism of a vehicle such as an automobile. When a travelling vehicle collides with a pebble on the road or the like, the compression coil spring may break. For this reason, the surface of the compression coil spring is protected by a coating film.

In the suspension coil spring device, the compression coil spring is held by a spring seat which absorbs vibration. Foreign substances, such as sand, are caught between the compression coil spring and the spring seat in some cases. The coating film is formed on the surface of the compression coil spring, but when the compression coil spring expands and contracts in a state where hard foreign substances, such as sand, are caught between the compression coil spring and the spring seat, the coating film is peeled off and rust is formed, or the surface of the compression coil spring is damaged by the foreign substances in some cases. When the amount of rust formed on a damaged part increases, the compression coil spring may break.

A suspension coil spring device in which a rubber vibration isolator is attached to a compression coil spring is proposed in Patent Literature 1 in order to provide protection between the compression coil spring and a spring seat. In the suspension coil spring device of Patent Literature 1, the compression coil spring and the rubber vibration isolator are joined to each other by an adhesive.

### CITATION LIST

Patent Literature 1
Japanese Unexamined Patent Application, First Publication No. 2015-190538

### SUMMARY OF INVENTION

### Technical Problem

However, when a force (adhesion) joining the compression coil spring and the rubber vibration isolator to each other is weak, foreign substances, such as sand, enter between the compression coil spring and the rubber vibration isolator in some cases.

In manufacturing a suspension coil spring device, it is necessary to join the compression coil spring and the rubber vibration isolator to each other in a short period of time and improve productivity.

In addition, it is necessary to join the compression coil spring and the rubber vibration isolator to each other without deteriorating the coating film on the surface of the compression coil spring and the rubber vibration isolator.

An object of the present invention is to provide a suspension coil spring device that includes an adhesive layer which has excellent adhesion and can suppress deterioration of a coating film and a rubber vibration isolator, and has excellent productivity.

### Solution to Problem

As a result of repeated studies, the present inventor has found out that the above problems can be solved by using a reactive hot melt adhesive as an adhesive for joining the compression coil spring and the rubber vibration isolator of the suspension coil spring device to each other.

That is, an aspect of the present invention has the following configuration.
[1] A suspension coil spring device including a compression coil spring that has a coating film, a rubber vibration isolator, and an adhesive layer that joins the compression coil spring and the rubber vibration isolator to each other, in which the adhesive layer is a cured product of a reactive hot melt adhesive.
[2] The suspension coil spring device according to [1], in which a softening point of the reactive hot melt adhesive is 40°C to 200°C.
[3] The suspension coil spring device according to [1] or [2], in which a softening point of the adhesive layer is 40°C to 250°C.

### Advantageous Effects of Invention

The suspension coil spring device of the present invention includes an adhesive layer that has excellent adhesion and can suppress the deterioration of the coating film and the rubber vibration isolator, and has excellent productivity.

### BRIEF DESCRIPTION OF DRAWINGS

Fig. 1 is a perspective view illustrating an embodiment of a suspension coil spring device of the present invention.
Fig. 2 is a sectional view taken along line II-II shown in Fig. 1.

### DESCRIPTION OF EMBODIMENTS

### Suspension Coil Spring Device

A suspension coil spring device of the present invention includes a compression coil spring, a rubber vibration isolator, and an adhesive layer.

Hereinafter, an embodiment of the suspension coil spring device of the present invention will be described in detail with reference to the drawings.

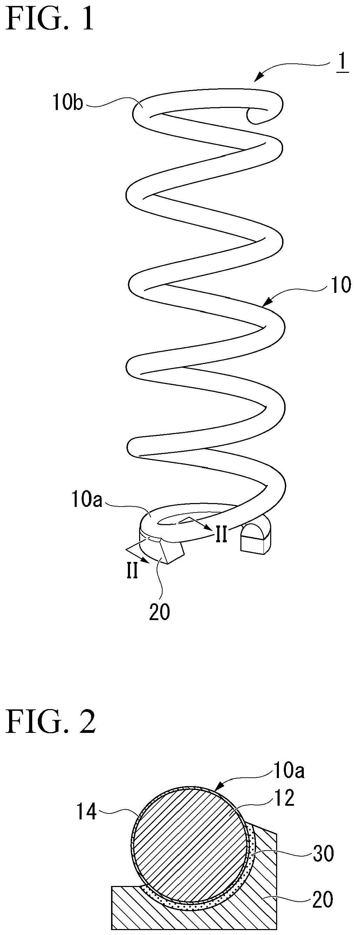

As illustrated in Fig. 1, a suspension coil spring device 1 of the present embodiment includes a compression coil spring 10 and a rubber vibration isolator 20. The compression coil spring 10 is formed in a spiral shape, and includes a first terminal portion 10a and a second terminal portion 10b.

As illustrated in Fig. 2, the first terminal portion 10a and the rubber vibration isolator 20 are joined to each other via an adhesive layer 30. The second terminal portion 10b can be accommodated in a spring-holding member (not illustrated). The suspension coil spring device 1 can be used, in particular, in a suspension mechanism of an automobile, and in this case, buffers or attenuates vertical motion of a vehicle in cooperation with a damper.

In the compression coil spring 10, a coating film 14 is formed that protects a wire 12 from collision with a pebble on the road (a stepping stone) and corrosion. The coating film 14 on the first terminal portion 10a and the rubber vibration isolator 20 are joined to each other via the adhesive layer 30.

### Compression Coil Spring

The compression coil spring 10 includes the wire 12 and the coating film 14 on the surface of the wire 12.

The wire 12 has a circular section. Examples of a material for the wire 12 include spring steel, cured spring steel, and fiber-reinforced plastic.

Examples of a material for the coating film 14 include an epoxy resin.

The heat-resistant temperature of the coating film 14 is preferably 160°C to 210°C. In a case where the heat-resistant temperature of the coating film 14 is equal to or higher than the lower limit value, the coating film 14 is unlikely to deteriorate when joining the compression coil spring 10 and the rubber vibration isolator 20 to each other using an adhesive. When the heat-resistant temperature of the coating film 14 is equal to or lower than the upper limit value, a material for the coating film 14 is easily adhered to the wire 12.

In the present specification, the heat-resistant temperature means a temperature at which a rubber product maintains a function thereof without being deformed or degraded in a state where a force has not been received.

The heat-resistant temperature of the coating film 14 is measured in accordance with JIS K 5600-6-3.

### Rubber Vibration Isolator

The rubber vibration isolator 20 is formed in a region including a lower end of the first terminal portion 10a of the compression coil spring 10. The rubber vibration isolator 20 is formed to rise along an outer side surface of the compression coil spring 10.

The rubber vibration isolator 20 is made of a material having rubber elasticity. Examples of the material for the rubber vibration isolator 20 include natural rubber, butadiene rubber, styrene-butadiene rubber, isoprene rubber, chloroprene rubber, nitrile rubber, and urethane rubber.

The heat-resistant temperature of the rubber vibration isolator 20 is preferably 80°C to 300°C, and more preferably 120°C to 180°C. In a case where the heat-resistant temperature of the rubber vibration isolator 20 is equal to or higher than the lower limit value, the rubber vibration isolator 20 is unlikely to deteriorate when joining the compression coil spring 10 and the rubber vibration isolator 20 to each other using an adhesive. When the heat-resistant temperature of the rubber vibration isolator 20 is equal to or lower than the upper limit value, the rubber vibration isolator 20 is easily formed.

The heat-resistant temperature of the rubber vibration isolator 20 is measured in accordance with JIS K 6257:2017.

### Adhesive Layer

The adhesive layer 30 joins the compression coil spring 10 and the rubber vibration isolator 20 to each other. The adhesive layer 30 is disposed between the compression coil spring 10 and the rubber vibration isolator 20.

The adhesive layer 30 is a cured product of a reactive hot melt adhesive. In the present specification, the reactive hot melt adhesive means an adhesive that melts when heated and has reactivity. Reactivity means properties of moisture curing, ultraviolet curing, or both moisture curing and ultraviolet curing.

In addition, in the present specification, a cured product means a product in which a thermoplastic resin is softened and fluidized by heating, is solidified by cooling, and becomes insoluble and infusible as an initial condensate of a moisture-curable resin or an ultraviolet-curable resin and is crosslinked by moisture or ultraviolet rays.

Examples of components of the reactive hot melt adhesive include a urethane prepolymer.

In general, the softening point of the reactive hot melt adhesive differs before and after curing. In the present specification, the softening point of the reactive hot melt adhesive will be referred to as a first softening point, and the softening point of the adhesive layer 30 will be referred to as a second softening point. Among the first softening point and the second softening point, the second softening point is generally higher. The first softening point and the second softening point may be the same.

In the present specification, the softening point means a temperature at which an amorphous solid substance having no clear melting point starts to soften and deform.

The softening point is acquired through differential scanning calorimetry (DSC). Specifically, the softening point can be measured using DSC DSC7000X manufactured by Hitachi High-Tech Corporation, which uses differential scanning calorimetry, under a temperature rising rate: 10°C/min, a temperature range: -100°C to 300°C, and an atmosphere: nitrogen gas 40 mL/min.

The first softening point is preferably 40°C to 200°C, and more preferably 100°C to 180°C. When the first softening point is equal to or higher than the lower limit value, the reactive hot melt adhesive is easily maintained. When the first softening point is equal to or lower than the upper limit value, deterioration of the coating film 14 and the rubber vibration isolator 20 is easily suppressed. In addition, the compression coil spring 10 and the rubber vibration isolator 20 are easily joined to each other in a short period of time.

The second softening point is preferably 40°C to 250°C, and more preferably 100°C to 250°C. When the second softening point is equal to or higher than the lower limit value, the strength of the adhesive layer 30 is easily improved. When the second softening point is equal to or lower than the upper limit value, peeling of the compression coil spring 10 or the rubber vibration isolator 20 and the adhesive layer 30 is easily suppressed.

The first softening point is preferably lower than the heat-resistant temperature of the coating film 14. A difference (ΔT₁) between the heat-resistant temperature of the coating film 14 and the first softening point is preferably 10°C or more, and more preferably, 30°C or more. In a case where ΔT₁ is equal to or larger than the lower limit value, the coating film 14 is unlikely to deteriorate when joining the compression coil spring 10 and the rubber vibration isolator 20 to each other. The upper limit value of ΔT₁ is not particularly limited, and, for example, is preferably 100°C.

The first softening point is preferably lower than the heat-resistant temperature of the rubber vibration isolator 20. A difference (ΔT₂) between the heat-resistant temperature of the rubber vibration isolator 20 and the first softening point is preferably 10°C or more, and more preferably, 30°C or more. In a case where ΔT₂ is equal to or larger than the lower limit value, the rubber vibration isolator 20 is unlikely to deteriorate when joining the compression coil spring 10 and the rubber vibration isolator 20 to each other. The upper limit value of ΔT₂ is not particularly limited, and, for example, is preferably 100°C.

The thickness of the adhesive layer 30 is preferably 5 to 3,000 pm, and more preferably 100 to 3,000 pm. When the thickness of the adhesive layer 30 is equal to or larger than the lower limit value, the compression coil spring 10 and the rubber vibration isolator 20 are easily joined to each other sufficiently. When the thickness of the adhesive layer 30 is equal to or smaller than the upper limit value, the strength of the adhesive layer 30 is easily improved.

The adhesive layer 30 preferably does not have stickiness. Stickiness means tackiness that occurs on the surface of a substance. When the adhesive layer 30 does not have stickiness, the adhesion of foreign substances such as sand is easily suppressed. Stickiness can be evaluated, for example, by attaching adhesive tape to the surface of the adhesive layer 30 and measuring a force when peeling off the adhesive tape.

### Manufacturing Method of Suspension Coil Spring Device

A manufacturing method of the suspension coil spring device 1 of the present invention has a step of forming the coating film 14 on the wire 12 and a step of joining the compression coil spring 10 and the rubber vibration isolator 20 to each other.

Examples of the step of forming the coating film 14 on the wire 12 include a step of treating the wire 12 with zinc phosphate, then coating the wire with a coating material, which is a material for the coating film 14, and drying the coating material (single coating). It is also possible to use double coating as the step of forming the coating film 14 on the wire 12. Double coating is a step of adhering a thin base layer (base coat) to a zinc phosphate layer, and then adhering an outer layer (top coat) thicker than the base layer.

Examples of the coating material include epoxy powder paint.

Through the step of forming the coating film 14 on the wire 12, the compression coil spring 10 in which the coating film 14 is formed on the surface of the wire 12 is obtained.

Examples of the step of joining the compression coil spring 10 and the rubber vibration isolator 20 to each other include providing a recess in the rubber vibration isolator 20 and pouring the heated reactive hot melt adhesive into the recess and fitting the compression coil spring 10 to the recess and then cooling and curing the reactive hot melt adhesive poured in the recess.

Cooling and curing of the reactive hot melt adhesive poured in the recess includes cooling processing of cooling the reactive hot melt adhesive and reacting processing of further curing the reactive hot melt adhesive.

A temperature at which the reactive hot melt adhesive is poured is preferably lower than the heat-resistant temperature of the coating film 14. A difference (ΔT₃) between the heat-resistant temperature of the coating film 14 and the temperature at which the reactive hot melt adhesive is poured is preferably 10°C or more, and more preferably, 30°C or more. In a case where ΔT₃ is equal to or larger than the lower limit value, the coating film 14 is unlikely to deteriorate when joining the compression coil spring 10 and the rubber vibration isolator 20 to each other. The upper limit value of ΔT₃ is not particularly limited, and, for example, is preferably 100°C.

The temperature at which the reactive hot melt adhesive is poured is preferably lower than the heat-resistant temperature of the rubber vibration isolator 20. A difference (ΔT₄) between the heat-resistant temperature of the rubber vibration isolator 20 and the temperature at which the reactive hot melt adhesive is poured is preferably 10°C or more, and more preferably, 30°C or more. In a case where ΔT₄ is equal to or larger than the lower limit value, the rubber vibration isolator 20 is unlikely to deteriorate when joining the compression coil spring 10 and the rubber vibration isolator 20 to each other. The upper limit value of ΔT4 is not particularly limited, and, for example, is preferably 100°C.

Examples of the cooling processing include maintaining an atmospheric temperature when pouring the reactive hot melt adhesive at room temperature (25°C), making the atmospheric temperature lower than room temperature after pouring the reactive hot melt adhesive, and blowing air and cooling the reactive hot melt adhesive poured in the recess. From the perspective of joining the compression coil spring 10 and the rubber vibration isolator 20 to each other in a shorter period of time, the processing of blowing air and cooling the reactive hot melt adhesive poured in the recess is preferable as cooling processing.

The atmospheric temperature in the cooling processing is preferably 1°C to 40°C, more preferably 10°C to 30°C, and even more preferably 24°C to 26°C. When the atmospheric temperature in the cooling processing is equal to or higher than the lower limit value, the strength of the adhesive layer 30 is easily improved. When the atmospheric temperature in the cooling processing is equal to or lower than the upper limit value, the compression coil spring 10 and the rubber vibration isolator 20 are easily joined to each other in a shorter period of time. As a result, the productivity of the suspension coil spring device 1 is easily improved.

Relative humidity in the reacting processing is preferably 10% or more, and more preferably 50% or more. When the relative humidity is equal to or higher than the lower limit value, the compression coil spring 10 and the rubber vibration isolator 20 are more easily joined to each other in a short period of time. As a result, the productivity of the suspension coil spring device 1 is easily improved. The upper limit value of the relative humidity is not particularly limited, and, for example, is preferably 95%.

In a case where the reactive hot melt adhesive is subjected to ultraviolet curing (UV-curing), the irradiation time in the reacting processing is preferably 3 to 5 seconds. When the irradiation time in the reacting processing is equal to or longer than the lower limit value, the compression coil spring 10 and the rubber vibration isolator 20 are easily joined to each other sufficiently. When the irradiation time in the reacting processing is equal to or shorter than the upper limit value, the compression coil spring 10 and the rubber vibration isolator 20 are easily joined to each other in a short period of time. As a result, the productivity of the suspension coil spring device 1 is easily improved.

The wavelength of an ultraviolet ray in the reacting processing is preferably 200 to 450 nm, and more preferably 200 to 380 nm. When the wavelength of the ultraviolet ray in the reacting processing is equal to or larger than the lower limit value, the deterioration of the coating film 14 and the rubber vibration isolator 20 is easily suppressed. When the wavelength of the ultraviolet ray in the reacting processing is equal to or smaller than the upper limit value, the compression coil spring 10 and the rubber vibration isolator 20 are easily joined to each other sufficiently.

As the step of joining the compression coil spring 10 and the rubber vibration isolator 20 to each other includes the reacting processing, the curing of the reactive hot melt adhesive is further facilitated, and adhesion between the compression coil spring 10 and the rubber vibration isolator 20 can be further improved.

The time required for the step of joining the compression coil spring 10 and the rubber vibration isolator 20 to each other is preferably 15 seconds or shorter. When the time required for the step of joining the compression coil spring 10 and the rubber vibration isolator 20 to each other is equal to or shorter than the upper limit value, the productivity of the suspension coil spring device 1 is easily improved. The time required for the step of joining the compression coil spring 10 and the rubber vibration isolator 20 to each other is preferably, for example, 5 seconds or longer from the perspective of sufficiently curing the reactive hot melt adhesive.

Through the step of joining the compression coil spring 10 and the rubber vibration isolator 20 to each other, the suspension coil spring device 1 in which the adhesive layer 30 is positioned between the compression coil spring 10 and the rubber vibration isolator 20 is obtained.

As described hereinbefore, since the reactive hot melt adhesive is used in the suspension coil spring device 1 of the present embodiment, the compression coil spring 10 and the rubber vibration isolator 20 can be joined to each other in a short period of time.

Further, since the reactive hot melt adhesive is used, adhesion between the compression coil spring 10 and the rubber vibration isolator 20 can be improved.

For example, although the compression coil spring 10 is a cylindrical coil spring in the embodiment, compression coil springs in various forms, including a barrel-shaped coil spring, a drum-shaped coil spring, a tapered coil spring, an unequal pitch coil spring, and other springs may be used depending on the specifications of a vehicle.

In carrying out the present invention, the shapes, dimensions, and disposition of the wire which configures the compression coil spring, and the rubber vibration isolator, including a specific shape and dimensions, the number of turns, a material, and a spring constant of the wire of the compression coil spring may be changed in various ways.

In addition, the present invention can also be applied to a suspension mechanism of a vehicle other than an automobile.

### REFERENCE SIGNS LIST

1 suspension coil spring device
10 compression coil spring
10a first terminal portion
10b second terminal portion
12 wire
14 coating film
20 rubber vibration isolator
30 adhesive layer

## Claims

1. A suspension coil spring device (1), comprising:
a compression coil spring (10) that has a coating film (14);
a rubber vibration isolator (20); and
an adhesive layer (30) that joins the compression coil spring and the rubber vibration isolator to each other,
**characterised in that**
the adhesive layer is a cured product of a reactive hot melt adhesive.

2. The suspension coil spring device according to Claim 1,
wherein a softening point of the reactive hot melt adhesive is 40°C to 200°C.

3. The suspension coil spring device according to Claim 1 or 2,
wherein a softening point of the adhesive layer is 40°C to 250°C.

## Patentansprüche

1. Spiralfederaufhängungsvorrichtung (1), die umfasst:
eine Druckspiralfeder (10), die einen Beschichtungsfilm (14) aufweist;
einen Gummischwingungsisolator (20); und
eine Klebeschicht (30), die die Druckspiralfeder und den Gummischwingungsisolator miteinander verbindet,
**dadurch gekennzeichnet, dass** die Klebeschicht ein gehärtetes Produkt eines reaktiven Schmelzklebstoffs ist.

2. Spiralfederaufhängungsvorrichtung nach Anspruch 1,
wobei ein Erweichungspunkt des reaktiven Schmelzklebstoffs 40°C bis 200°C beträgt.

3. Spiralfederaufhängungsvorrichtung nach Anspruch 1 oder 2,
wobei ein Erweichungspunkt der Klebeschicht 40°C bis 250°C beträgt.

## Revendications

1. Dispositif de ressort hélicoïdal de suspension (1), comprenant :
un ressort hélicoïdal de compression (10) qui présente un film de revêtement (14) ;
un amortisseur de vibrations en caoutchouc (20) ; et
une couche adhésive (30)
qui joint le ressort hélicoïdal de compression et l'amortisseur de vibrations en caoutchouc l'un à l'autre,
**caractérisé en ce que** la couche adhésive est un produit durci d'un adhésif thermodurcissable réactif.

2. Dispositif de ressort hélicoïdal de suspension selon la revendication 1,
dans lequel un point de ramollissement de l'adhésif thermodurcissable réactif est de 40°C à 200°C.

3. Dispositif de ressort hélicoïdal de suspension selon la revendication 1 ou 2,
dans lequel un point de ramollissement de la couche adhésive est de 40°C à 250°C.
